# DEMANDE DE BREVET EUROPEEN

(11) **EP 2 674 368 A1**
(43) Date de publication de la demande: **18.12.2013**
(21) Numéro de dépôt: 12172306.8
(22) Date de dépôt: 15.06.2012
(51) Int. Cl.: B65D 35/02

(54) **Corps tubulaire d'emballage soudé bout à bout**

(71) Demandeur: Aisapack Holding SA, 1896 Vouvry (CH)
(72) Inventeur: Thomasset, Jacques, 1896 Vouvry (CH); Keller, Gerhard, 1896 Vouvry (CH)
(74) Mandataire: Grosfillier, Philippe

(57) **Abrégé**

La présente invention concerne un corps tubulaire d'emballage (1) formé à partir d'un film flexible (2) d'une épaisseur e dont les extrémités sont soudées bout à bout et recouvertes par un élément de renfort (7) disposé sur la surface interne dudit corps tubulaire et ayant une section définie par une largeur I et une hauteur h, ledit corps tubulaire étant caractérisé par le fait que toutes les conditions suivantes doivent être remplies :
- h est égale ou supérieure à e,
- le rapport (I.e)/h² est compris entre 1 et 10.

## Description

### Domaine de l'invention

L'invention se situe dans le domaine des tubes ou poches flexibles formés au moyen de films plastiques. Elle concerne plus précisément les tubes ou poches flexibles dont les extrémités sont soudées bout à bout.

### Etat de la technique

De nombreux tubes flexibles sont confectionnés par soudage des extrémités d'un film contenant au moins une couche de plastique.

Le soudage bout à bout de films flexibles pour former des corps tubulaires d'emballage est décrit dans les demandes de brevet W02007113781 et W02007113782. Le soudage bout à bout est avantageux dans de nombreux cas, car cette configuration de soudage permet d'améliorer l'esthétisme des emballages grâce à une décoration sur toute la circonférence des corps tubulaires. Le soudage bout à bout permet également de limiter les interactions entre le produit emballé et l'emballage car les éventuelles migrations par la tranche du film flexible sont très fortement diminuées. Grâce au soudage bout à bout, l'utilisation de nouvelles structures multicouches devient possible. Les emballages multicouches ainsi obtenus présentent une plus grande résistance à la délamination.

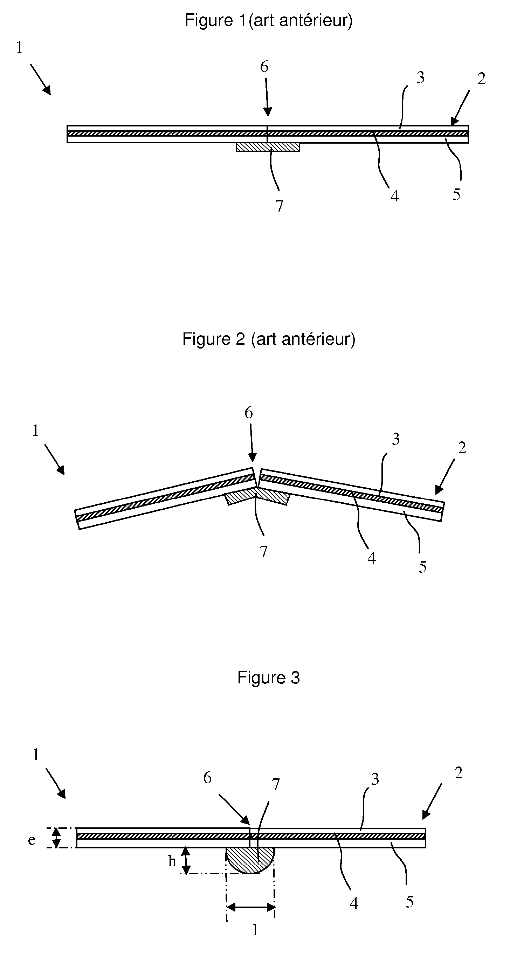

La résistance de l'emballage à l'endroit de la zone soudée bout à bout est souvent inférieure à la résistance du film flexible. Cette diminution de résistance est encore plus critique avec des films multicouches qui comportent des couches non soudantes bout à bout. Pour pallier à ces difficultés, les demandes de brevet W02007113781 et W02007113782 proposent l'ajout d'une bande de renfort de fine épaisseur au niveau de la soudure bout à bout. La figure 1, illustre une solution décrite dans la demande W02007113781. Un corps tubulaire d'emballage 1 est formé à partir d'un film flexible multicouche 2 comportant une couche intermédiaire 4 dont le soudage bout à bout n'est que partiel ou inexistant. Afin de renforcer la zone de soudage bout à bout 6, la demande de brevet W02007113781 décrit l'usage d'une bande de renfort 7 de fine épaisseur et de grande résistance. La bande 7 est soudée sur la couche inférieure 5 du film multicouche et relie les deux extrémités soudées du laminé. Comme il est décrit dans la demande W02007113781, l'emballage ainsi obtenu présente une grande résistance en traction, à l'éclatement ou à la déchirure au niveau de la zone 6 grâce aux propriétés de la bande de renfort 7.

### Problème à résoudre

Cependant, après test et usage des tubes flexibles fabriqués selon la méthode décrite dans le brevet W02007113781, il est observé que la déformation répétitive de l'emballage pour extraire le produit peut créer une rupture de la zone soudée 6 et faire apparaitre le défaut illustré figure 2. La figure 2 montre que malgré la rupture de la soudure bout à bout, l'emballage conserve son étanchéité grâce aux propriétés de la bande 7. Cependant, l'apparition de ce défaut peut laisser croire à l'utilisateur que l'emballage est de mauvaise qualité ou défectueux.

### Définition des termes utilisés dans l'exposé de l'invention

Dans l'exposé de l'invention les termes et abréviations suivants sont utilisés :

Film multicouche : film comportant plusieurs couches. Le film multicouche peut être obtenu par coextrusion ou/et complexage.
PET : polyéthylène téréphtalate bi orienté
BOPP : polypropylène bi orienté
PA : polyamide
PE : polyéthylène
LDPE : polyéthylène basse densité
LLDPE : polyéthylène basse densité linéaire
HDPE : polyéthylène haute densité
EVOH : éthylène alcool vinylique
Adhésif : colle utilisée pour associer plusieurs couches par complexage

### Exposé général de l'invention

L'invention consiste à ajouter au niveau de la soudure bout à bout un élément de renfort ayant pour effet de rendre la zone de soudée indéformable perpendiculairement aux extrémités soudées sans modifier de façon sensible la flexibilité de la zone soudée selon la direction tangentielle aux extrémités soudées.

Selon l'invention, l'élément de renfort ajouté au niveau de la soudure bout à bout est invisible et imperceptible. Il est invisible car situé à l'intérieur de l'emballage. Il est imperceptible car sa petite taille ne modifie pas de façon significative la flexibilité de l'emballage.

Selon l'invention, la zone de soudure est rendue indéformable localement et dans la direction perpendiculaire aux extrémités soudées grâce à l'ajout à l'intérieur de l'emballage d'un élément de renfort qui est indéformable sous l'action des doigts dans la direction perpendiculaire à l'axe de l'élément de renfort, et facilement déformable dans la direction de l'élément de renfort.

Etonnamment, il a été trouvé qu'un élément de renfort de très petite taille permet de remédier au problème de fragilité de la zone soudée. Il a été trouvé que la section de l'élément de renfort définie par sa largeur I et sa hauteur h dépend de l'épaisseur e du film d'emballage et doit respecter les conditions suivantes :
- la hauteur h est égale ou supérieure à l'épaisseur e du film,
- le rapport (l.e)/h² est compris entre 1 et 10.

En dehors de ces limites, on trouve que l'effet de l'élément de renfort pour protéger la soudure est insuffisant ou, à l'opposé, que la rigidité en flexion de l'élément de renfort selon l'axe principal est trop grand et modifie de façon sensible la flexibilité de l'emballage.

L'invention consiste en un emballage tubulaire formé d'un film flexible soudé bout à bout et comportant au niveau de la soudure un élément de renfort invisible et imperceptible reliant les extrémités soudées et empêchant toute sollicitation de la zone soudée perpendiculairement aux extrémités soudées.

Plus précisément, l'invention consiste en un corps tubulaire d'emballage formé à partir d'un film flexible d'une épaisseur e dont les extrémités sont soudées bout à bout et recouvertes par un élément de renfort disposé sur la surface interne dudit corps tubulaire et ayant une section définie par une largeur I et une hauteur h, ledit corps tubulaire étant caractérisé par le fait que toutes les conditions suivantes doivent être remplies :
- h est égale ou supérieure à e,
- le rapport (l.e)/h² est compris entre 1 et 10.

De manière préférentielle, la hauteur h de l'élément de renfort est au maximum égale à deux fois l'épaisseur e du film.

De manière plus préférentielle, les conditions suivantes doivent également être remplies :
- h est compris entre 100 µm et 500 µm,
- e est compris entre 100 µm et 400 µm.

De manière encore plus préférentielle, la hauteur h de l'élément de renfort est 1,2 fois égale à l'épaisseur e du film.

Préférentiellement, I est compris entre 1 et 3 mm.

Le film peut être monocouche ou multicouche.

L'invention est particulièrement avantageuse lorsque le film multicouche comprend des couches qui ne se soudent pas ou ne se soudent que partiellement comme par exemple des couches d'aluminium, d'EVOH, de PA, de PET, de BOPP, de papier ou produits à base de cellulose.

L'invention est particulièrement avantageuse lorsque la couche formant la surface externe de l'emballage ne se soude pas ou ne se soude que partiellement. C'est le cas par exemple des films multicouches ayant en surface externe des couches de PET, BOPP, papier, PA.

Selon une première variante de l'invention, l'élément de renfort ajouté à l'intérieur de l'emballage améliore également de façon sensible les propriétés d'imperméabilité de la zone soudée comme par exemple l'imperméabilité à l'oxygène, aux arômes, à la vapeur d'eau ou encore aux solvants. Selon les propriétés d'imperméabilité désirées, l'élément de renfort peut être multicouche et/ou contenir des absorbeurs d'oxygène.

Les absorbeurs d'oxygène peuvent être par exemple des polymères organiques qui fonctionnent par oxydation de fer, d'acide ascorbique ou d'un polyamide catalysée par du cobalt ; ces produits sont standards sur le marché. Ces éléments réagissent avec l'oxygène afin de limiter la migration des molécules d'oxygène à l'intérieur de l'emballage.

Selon une deuxième variante de l'invention, l'élément de renfort contient des additifs permettant de lutter contre la contrefaçon. Ces additifs de taille microscopique ou nanoscopique ne modifient pas les propriétés mécaniques de l'élément de renfort.

Ces additifs sont par exemple des sels métalliques ou encore des dérivés de particules de mélamine réticulée ou des poudres de taille micrométrique ou nanométrique. Ces additifs ajoutés en très petite quantité dans la matière plastique sont généralement vendus sous forme de composés ou mélanges maîtres (masterbatch) et peuvent être facilement intégrés dans le procédé de fabrication de l'élément de renfort 7. Ces produits sont commercialisés par exemple par les entreprises Micro trace, Polysecure ou Phoenix plastics.

Le premier procédé de réalisation du corps tubulaire d'emballage selon l'invention consiste à former l'élément de renfort conjointement à la soudure bout à bout du film flexible. Dans un mode de réalisation préférentiel, un cordon est extrudé et déposé à l'état fondu sur les extrémités du film flexible ; l'énergie thermique contenue dans le cordon est utilisée pour souder le cordon sur le film flexible et souder au moins partiellement les extrémités du film flexible l'une contre l'autre ; et finalement le cordon est mis en forme par un outil adapté pour former l'élément de renfort selon les dimensions définies dans l'invention.

Un deuxième procédé consiste à souder sur les extrémités du film flexible un élément de renfort préalablement fabriqué. Le soudage de l'élément de renfort sur la face du film flexible formant la paroi interne de l'emballage se fait conjointement au soudage bout à bout du film flexible. Dans un mode préférentiel, le cordon est préchauffé avant l'opération de soudage.

Dans une variante de l'invention, le procédé est avantageusement couplée à une coupe en biseau des extrémités du film flexible pour faciliter le soudage bout à bout. La coupe en biseau des extrémités soudées du film flexible permet d'augmenter la surface en contact et la mise en pression de la zone soudée. Selon un mode préférentiel de l'invention, un angle de coupe de 45° par rapport à la surface du film est utilisé.

### Brève description des figures

L'invention sera mieux comprise à l'aide de la description de modes d'exécution de celles-ci et des figures suivantes dans lesquelles:
La figure 1 décrit l'utilisation d'un élément de renfort de soudage à l'intérieur d'un emballage tel qu'il est décrit dans l'art antérieur.
La figure 2 illustre le défaut observé avec les éléments de renfort de soudage décrits dans l'art antérieur.
Les figures 3 à 8 illustrent plusieurs modes de réalisation de l'invention. Les figures 3 à 8 montrent la vue en coupe de la zone soudée de l'emballage tubulaire, la coupe étant prise perpendiculairement à l'axe du corps tubulaire.
La figure 3 présente un premier exemple de réalisation de l'invention consistant à utiliser un élément de renfort de section semi-ovale caractérisé par sa largeur et sa hauteur pour renforcer la soudure.

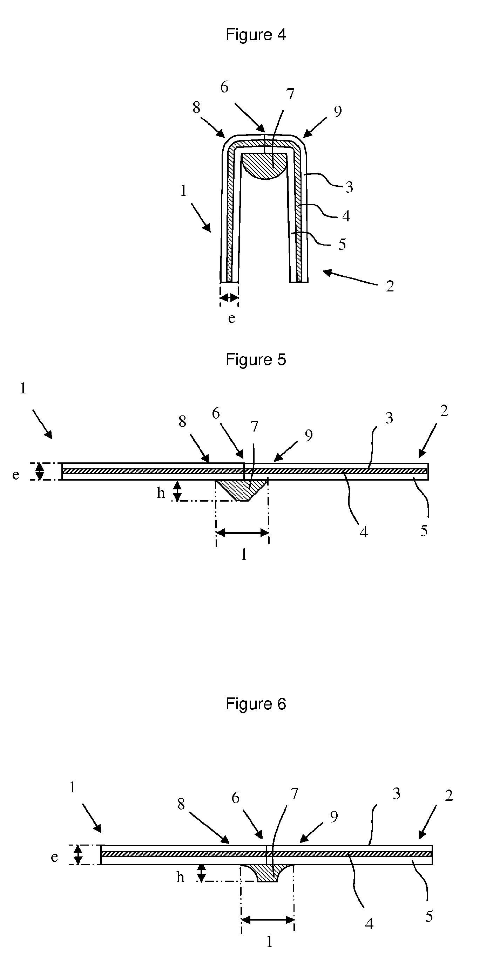

La figure 4 présente l'effet de l'élément de renfort sur le renfort de la zone soudée et le déplacement des contraintes en dehors de la zone soudée.
Les figures 5 à 7 illustrent différentes sections d'éléments de renfort permettant de renforcer la zone soudée selon l'invention.

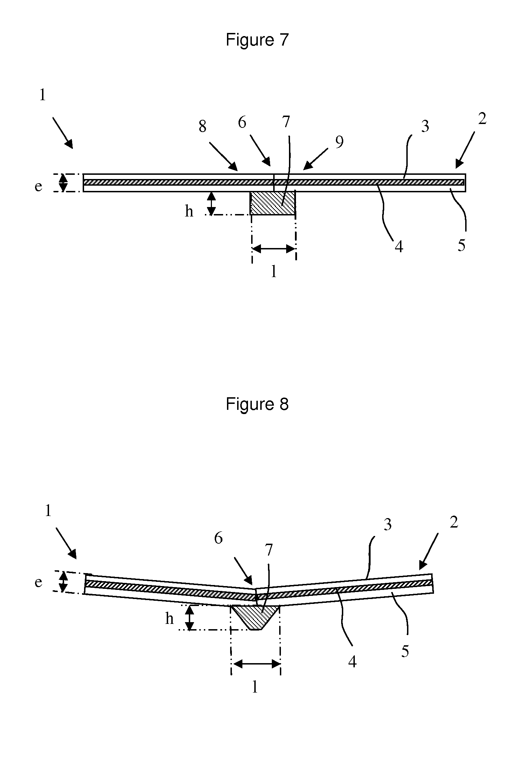

La figure 8 montre une variante de l'invention consistant également à contraindre la zone soudée dans la direction opposée à la sollicitation de la soudure lors de l'utilisation de l'emballage.

### Exposé détaillé de l'invention

L'invention consiste en une nouvelle configuration de soudage bout à bout pour film flexible consistant à ajouter à l'intérieur de l'emballage un élément de renfort de petite dimension reliant les extrémités soudées du film flexible ; ledit élément de renfort ayant pour effet d'empêcher toute déformation de la zone soudée perpendiculairement aux extrémités soudées ; et ledit élément de renfort ayant une géométrie telle que la flexibilité de la zone soudée selon la direction tangentielle aux extrémités soudées n'est pas modifiée de façon sensible.

L'élément de renfort a pour effet d'empêcher la modification du rayon de courbure de l'emballage au niveau de la zone soudée bout à bout.

Les figures 3 à 8 montrent la vue en coupe de la zone soudée de l'emballage tubulaire, la coupe étant prise perpendiculairement à l'axe du corps tubulaire.

La figure 3 illustre un premier exemple de réalisation de l'invention. Le corps tubulaire 1 est formé par soudage bout à bout des extrémités d'un film flexible 2 d'épaisseur e. La zone soudée 2 est parallèle à l'axe du corps tubulaire. Un élément de renfort de section semi-ovale 7 relie les extrémités du film flexible 2 et renforce la zone soudée 6. L'invention se caractérise par le fait que l'élément de renfort 7 empêche toute déformation locale de la zone soudée 6 perpendiculairement aux extrémités soudées tout en modifiant peu la flexibilité de l'emballage parallèlement aux extrémités soudées. Au niveau de la zone soudée 6, l'élément de renfort 7 empêche la variation du rayon de courbure qui aurait pour effet de solliciter en traction les extrémités soudées du film flexible. Il a été trouvé que la hauteur h de l'élément de renfort dépend de l'épaisseur e du film et doit être égale ou supérieure à l'épaisseur e du film, que la largeur I de l'élément de renfort doit être comprise entre 1 mm et 3 mm, et que le rapport (l.e)/h² est compris entre 1 et 10.

La figure 4 illustre l'effet de renforcement de la zone soudée 6 par l'élément de renfort 7. La déformation en flexion de la zone soudée 6 perpendiculairement aux extrémités soudées devient impossible du fait de la géométrie de l'élément de renfort 7 qui apporte localement une très grande rigidité. Dans le sens de la soudure, la flexibilité de l'emballage est très peu modifiée car l'élément de renfort 7 est sollicité dans le sens de la longueur et sa section est de petite dimension par rapport à la section de l'emballage qui est sollicitée lors d'une déformation. Des tests utilisateurs en aveugle montrent que l'utilisateur ne détecte pas la présence de l'élément de renfort 7 lors de la manutention de l'emballage pour en extraire le produit par exemple.

Comme il est illustré figure 3, l'invention est particulièrement avantageuse lorsque le film est formé d'une structure multicouche. La figure 3 montre le soudage bout à bout d'un film comportant 3 couches ; une première couche 3 formant la surface externe de l'emballage, une couche intermédiaire 4, et une couche 5 formant la surface interne de l'emballage. L'élément de renfort 7 est soudé sur la couche 5 et se trouve par conséquent à l'intérieur de l'emballage. Les matières constituant l'élément de renfort 7 et la couche inférieure 5 du film multicouche sont généralement de même nature afin de permettre le soudage de l'élément de renfort 7 sur la couche 5. Les matières utilisées pour la couche 5 et l'élément de renfort 7 sont par exemple des polyoléfines couramment utilisées pour confectionner des emballages. La couche intermédiaire 4 est souvent une couche barrière comme par exemple une couche d'aluminium ou une couche d'EVOH ou encore une couche PET métallisé. Les éventuelles couches adhésives ne sont pas représentées sur les figures du brevet afin de ne pas alourdir l'exposé de l'invention. La couche 3 formant la surface externe de l'emballage est souvent choisie pour sa capacité à être imprimée, pour ses propriétés au toucher mais également pour sa résistance. La couche externe 3 est par exemple une couche « soft touch » à base de polyoléfine ou une couche de PET biorienté pour sa capacité à être imprimée, pour sa résistance, pour sa transparence, pour sa brillance. Le soudage bout à bout du film multicouche 2 conduit souvent à un soudage partiel du fait de la nature des couches et de leur fine épaisseur. Il en résulte une résistance amoindrie au niveau de la soudure. L'invention permet d'éviter toute sollicitation de la zone soudée ayant pour effet de créer le défaut illustré figure 2.

L'effet de l'élément de renfort 7 sur la résistance de la soudure est illustré figure 4. Lors d'une action de pliage de l'emballage au niveau de la soudure illustrée figure 4 qui aurait pour effet de séparer les extrémités du film multicouche, la zone soudée 6 se retrouve exempte de contrainte et déformation grâce à l'action de l'élément de renfort 7 dont la section est en forme de semi-ovale. La géométrie et la petite dimension de l'élément de renfort 7 a pour effet de concentrer les contraintes et les déformations dans les zones 8 et 9 qui sont éloignées de la soudure. Du fait de sa petite taille et de sa forme, la section de l'élément de renfort 7 n'est pas déformable sous l'action de la pression des doigts. La section de l'élément de renfort 7 augmente localement de façon significative la rigidité en flexion de l'emballage dans la direction perpendiculaire aux extrémités soudées. Cette augmentation de la rigidité de l'emballage perpendiculairement aux extrémités soudées se fait localement sur une distance totale inférieure ou égale à 3 mm. L'ordre de grandeur de l'augmentation de la rigidité en flexion au niveau de la soudure et perpendiculairement aux extrémités soudées est d'un facteur au moins égal à 25, voire 100. Par contre, l'élément de renfort 7 influe peu la rigidité de l'emballage dans la direction parallèle aux extrémités soudées. Par contre, on estime que, du fait de sa petite taille, l'élément de renfort 7 n'augmente la rigidité en flexion de l'emballage que d'un facteur inférieur ou égale à 4. Les différents tests effectués mettent en évidence que l'utilisateur ne détecte pas la présence de l'élément de renfort 7 lors de l'utilisation de l'emballage. L'élément de renfort 7 est invisible car situé à l'intérieur de l'emballage et imperceptible car les propriétés de l'emballage ne sont modifiées que très localement.

Les figures 5, 6, et 7 montrent d'autres sections de l'élément de renfort 7 avantageuses. La figure 5 illustre un élément de renfort de section en forme de trapèze isocèle, la figure 6 un élément de renfort de section en forme de trapèze isocèle dont les deux côtés sont concaves et la figure 7 un élément de renfort de section en forme de rectangle. Les géométries de l'élément de renfort illustrées figures 5 et 6 permettent de limiter la concentration de contrainte qui peut apparait dans les zones 8 et 9 lorsque le film multicouche est plié fortement au niveau de la soudure. Ces sections de l'élément de renfort 7 permettent une transition plus progressive de la déformation du film multicouche dans les zones 8 et 9 et évitent d'éventuelles concentrations de contraintes qui auraient pour effet de dégrader le film multicouche. La figure 7 illustre la section d'un élément de renfort 7 facile à produire mais pouvant créer de fortes concentrations de contraintes dans les zones 8 et 9 lors du pli du film 1 le long de la soudure 6.

La figure 8 montre une variante de l'invention consistant à pré-contraindre le film multicouche par l'élément de renfort de section 7 au niveau de la soudure 6. La précontrainte a pour effet de plaquer l'une contre l'autre les extrémités du film au niveau de la soudure bout à bout 6.

Le film multicouche illustré figures 3 à 8 comporte une couche 3 formant la surface supérieure du laminé ; une deuxième couche 5 formant la surface inférieure du laminé et une couche 4 emprisonnée entre les couches 3 et 5 ; les dites couches 3, 4, et 5 pouvant être de nature différente ; et lesdites couches 3, 4, et 5 étant liées entre elles au niveau de leur interface. Le film multicouche 2 comporte généralement une ou plusieurs couches non soudante(s) bout à bout. La couche 3 est habituellement choisie pour sa capacité à être imprimée. Cette couche est constituée par exemple de PE ou PP, de papier, de PET ou BOPP. Cette couche peut être imprimée sur sa face externe formant la surface du film multicouche ou sur sa face interne se trouvant emprisonnée dans l'épaisseur du film multicouche. La couche 4 formant une fine couche à propriétés barrière n'est généralement pas soudée au niveau de ses extrémités. La couche 4 est par exemple une feuille d'aluminium ou une couche d'EVOH (éthylène alcool vinyle). La couche 5 formant la surface interne du tube est soudée au niveau de ses extrémités. Une couche 5 en polyoléfine est avantageuse. L'élément de renfort 7 est rendue solidaire de la couche inférieure 5 par soudage. L'élément de renfort 7 comporte au moins une couche de même nature que la couche inférieure 5 du film multicouche.

Il est souvent avantageux d'utiliser l'élément de renfort 7 pour améliorer conjointement la résistance de la soudure et ses propriétés d'imperméabilité. L'utilisation d'un élément de renfort multicouche et/ou contenant des absorbeurs d'oxygène permet d'améliorer également l'imperméabilité de la zone soudée à l'oxygène par exemple. La combinaison d'une couche aluminium dans le film flexible avec un élément de renfort multicouche ou contenant des absorbeurs d'oxygène permet de fabriquer des emballages d'une très grande imperméabilité. Un élément de renfort multicouche comprendra avantageusement une fine couche d'EVOH ou autre polymère barrière.

L'élément de renfort 7 est utilisé avantageusement pour améliorer conjointement la résistance de la soudure et la protection contre la contrefaçon de l'emballage. L'élément de renfort 7 peut contenir des additifs sous forme de nano particules tels que des sels ou oxydes métalliques ou encore des micro-additifs multicouches dont les combinaisons de couches et couleurs peuvent donner plus de 37 millions de codes uniques.

Plusieurs procédés de confection de l'emballage selon l'invention peuvent être envisagés.

Un premier procédé consiste à extruder un cordon et le déposer à l'état fondu sur les extrémités du film flexible. La chaleur contenue dans le cordon est utilisée pour souder le cordon sur la couche 5 du film flexible, et souder bout à bout au moins partiellement les extrémités du film flexible. Le cordon est ensuite mis en forme grâce à un outil de géométrie adaptée pour former l'élément de renfort dont la section correspond aux dimensions définies dans l'invention. Lors de l'extrusion, la géométrie du cordon est cylindrique ; ledit cordon cylindrique est déposé à l'état fondu sur les extrémités du film flexible ; une partie de la chaleur contenue dans le cordon cylindrique est transférée au film flexible au niveau des extrémités ; ledit cordon est mis en forme et pressé contre la surface du film flexible pour former l'élément de renfort 7 dont la section correspond à la description faite dans l'invention ; le profilé est refroidi ainsi que la zone soudée 6.

Le dépôt du cordon à l'état fondu est mis en oeuvre grâce à un mouvement relatif entre le dispositif d'extrusion et le film flexible. Préférentiellement, le dispositif d'extrusion est fixe et l'emballage se déplace à vitesse constante par rapport audit dispositif d'extrusion. L'opération de mise en forme de l'élément de renfort est réalisée par pression du cordon dans un outil de forme. Dans un premier exemple, l'outil de mise en forme est fixe par rapport au cordon et au film flexible. Le cordon à l'état fondu est pressé contre l'outil de forme comprenant une gorge dont la section correspond à la section de l'élément de renfort. Préférentiellement, l'outil de forme est maintenu à une température inférieure à celle du cordon, ce qui a pour effet de refroidir l'élément de renfort conjointement ou immédiatement après sa formation. Dans un deuxième exemple, l'outil de mise en forme se déplace conjointement au cordon à l'état fondu afin d'éviter les frottements lors de l'opération de mise en forme de l'élément de renfort. L'outil de forme peut être une roue comprenant une gorge sur sa périphérie dont la section correspond à la section de l'élément de renfort. La vitesse tangentielle de la roue au niveau de l'interface avec le film flexible est égale à la vitesse de déplacement du film flexible. Dans un mode de réalisation préférentiel la roue est entrainée en rotation par le déplacement du film flexible.

Un deuxième procédé de réalisation de la soudure est basé sur l'extrusion d'un cordon dont la section est proche de la section de l'élément de renfort puis à former la géométrie finale de l'élément de renfort selon le premier procédé.

Un troisième procédé de réalisation de la soudure est basé sur l'utilisation d'un élément de renfort 7 préalablement fabriqué, puis à son assemblage sur les extrémités disposées bout à bout du film flexible 2. Un mode de réalisation préférentiel du troisième procédé consiste à souder l'élément de renfort 7 sur le film flexible 2 conjointement à l'opération de soudage bout à bout des extrémités du film flexible 2.

Voici quelques exemples de structure d'emballage et de géométrie d'éléments de renfort réalisés selon l'invention :

Description du film multicouche du premier exemple :
- Couche 3 : couche de PET d'épaisseur 12 microns
- Couche 4 : couche de PET métallisée d'épaisseur 12 microns
- Couche 5 : couche de PE d'épaisseur 140 microns
- L'épaisseur e du film flexible est égale à 0.164 mm

Description de l'élément de renfort du premier exemple :
- Elément de renfort en PE de section semi-ovale tel qu'illustré figure 3
- La largeur I est égale à 2 mm
- La hauteur h est égale à 0.5 mm
- Le rapport (l.e)/h² est égal à 1.312.

Description du film multicouche du deuxième exemple :
- Couche 3 : couche de papier d'épaisseur 100 microns
- Couche 4 : couche de PET métallisée d'épaisseur 12 microns
- Couche 5 : couche de PE d'épaisseur 100 microns
- L'épaisseur e du film flexible est égale à 0.212 mm

Description de l'élément de renfort du deuxième exemple :
- Elément de renfort en PE de section de trapèze isocèle tel qu'illustré figure 5
- L'élément de renfort comporte des micro-additifs multicouches pour éviter la contrefaçon de l'emballage
- La largeur I est égale à 2.0 mm
- La hauteur h est égale à 0.4 mm
- Le rapport (l.e)/h² est égal à 2.650.

Description du film multicouche du troisième exemple :
- Première Couche : couche de BOPP d'épaisseur 20 microns
- Deuxième couche : couche de PE d'épaisseur 140 microns
- Troisième Couche : couche d'aluminium d'épaisseur 7 microns
- Quatrième Couche : couche de PE d'épaisseur 100 microns
- L'épaisseur e du film flexible est égale à 0.267 mm

Description de l'élément de renfort du troisième exemple :
- Elément de renfort en PE de section de trapèze isocèle ayant ses deux côtés concaves telle qu'illustré figure 6
- L'élément de renfort en PE contient des absorbeurs d'oxygène
- La largeur I est égale à 3 mm
- La hauteur h est égale à 0.4 mm
- Le rapport (l.e)/h² est égal à 5.006.

Description du film multicouche du quatrième exemple
- Couche 3 : couche de PET d'épaisseur 12 microns imprimée sur la face inférieure
- Couche 4 : couche PET avec revêtement Siox d'épaisseur 12 microns
- Couche 5 : couche de PE d'épaisseur 200 microns
- L'épaisseur e du film flexible est égale à 0.224 mm

Description de l'élément de renfort du quatrième exemple
- Elément de renfort à section rectangulaire tel qu'illustré figure 7
- La largeur I du renfort est égale à 3 mm
- La hauteur h du renfort est égale à 0.27 mm
- Le rapport (l.e)/h² est égal à 9.218.

Description du film multicouche du cinquième exemple :
- Couche 3 : couche de BOPP d'épaisseur 20 microns imprimée sur la face supérieure
- Couche 4 : couche d'aluminium d'épaisseur 9 microns
- Couche 5 : couche de PE d'épaisseur 140 microns
- L'épaisseur e du film flexible est égale à 0.169 mm

Description de l'élément de renfort du cinquième exemple :
- Elément de renfort à section rectangulaire tel qu'illustré figure 7
- La largeur I du renfort est égale à 1.2 mm
- La hauteur h du renfort est égale à 0.3 mm
- Le rapport (l.e)/h² est égal à 2.253.

Description du film monocouche du sixième exemple :
- L'épaisseur e du film flexible en PE est égale à 0.380 mm

Description de l'élément de renfort du sixième exemple :
- Elément de renfort à section semi-ovale tel qu'illustré figure 3
- La largeur I du renfort est égale à 2.2 mm
- La hauteur h du renfort est égale à 0.4 mm
- Le rapport (l.e)/h² est égal à 5.225.

Description du film multicouche du septième exemple :
- Couche 3 : couche de PE d'épaisseur 280 microns imprimée sur la face supérieure
- Couche 4 : couche d'aluminium d'épaisseur 20 microns
- Couche 5 : couche de PE d'épaisseur 100 microns
- L'épaisseur e du film flexible est égale à 0.4 mm

Description de l'élément de renfort du septième exemple :
- Elément de renfort à section rectangulaire tel qu'illustré figure 7
- La largeur I du renfort est égale à 2.4 mm
- La hauteur h du renfort est égale à 0.45 mm
- Le rapport (l.e)/h² est égal à 4.741.

L'invention est particulièrement avantageuse car elle permet de réaliser des emballages en soudant bout à bout des films qui associent des couches soudantes et des couches qui ne se soudent pas bout à bout. L'invention permet d'assembler bout à bout les extrémités d'un film dont les extrémités se soudent partiellement.

L'invention permet d'obtenir des emballages soudés avec une très grande résistance au niveau de la zone soudée. Les emballages obtenus peuvent être imprimés sur toute leur surface sans rupture de l'impression dans la zone soudée. L'invention permet l'obtention d'emballages de grande résistance et à l'esthétique améliorée.

L'invention est particulièrement avantageuse pour la réalisation de tubes d'emballages. L'invention présente également de nombreux avantages pour la réalisation de poches flexibles d'emballage.

La description de l'invention a été faite avec des films flexibles comprenant 3 couches. Dans cette description, les couches adhésives de faible épaisseur qui sont indispensables à la cohésion du film multicouche ont été volontairement exclues de la description pour ne pas alourdir l'exposé de l'invention. Il est évident également pour l'homme du métier que l'invention ne se limite pas aux films flexibles comprenant une à 3 couches ; le nombre de couche n'étant pas un facteur limitatif de l'invention.

## Revendications

1. Corps tubulaire d'emballage formé à partir d'un film flexible d'une épaisseur e dont les extrémités sont soudées bout à bout et recouvertes par un élément de renfort disposé sur la surface interne dudit corps tubulaire et ayant une section définie par une largeur I et une hauteur h, ledit corps tubulaire étant **caractérisé par le fait que** toutes les conditions suivantes doivent être remplies :
- h est égale ou supérieure à e,
- le rapport (l.e)/h² est compris entre 1 et 10.

2. Corps tubulaire selon la revendication 1, **caractérisé en ce que** la hauteur h est au maximum égale à deux fois l'épaisseur e.

3. Corps tubulaire selon la revendication 1 ou 2, **caractérisé par le fait que** les conditions suivantes doivent également être remplies :
- h est compris entre 100 µm et 500 µm,
- e est compris entre 100 µm et 400 µm.

4. Corps tubulaire selon l'une des revendications 2 ou 3, **caractérisé en ce que** la hauteur h est égale à 1,2 fois l'épaisseur e.

5. Corps tubulaire selon l'une des revendications précédentes, **caractérisé en ce que** I est compris entre 1 mm et 3 mm.

6. Corps tubulaire selon l'une des revendications précédentes, **caractérisé en ce que** ledit élément de renfort a une section en forme de semi-ovale.

7. Corps tubulaire selon l'une des revendications 1 à 4, **caractérisé en ce que** ledit élément de renfort a une section en forme de trapèze isocèle.

8. Corps tubulaire selon l'une des revendications 1 à 4, **caractérisé en ce que** ledit élément de renfort a une section en forme de trapèze isocèle ayant ses deux côtés concaves.

9. Corps tubulaire selon l'une des revendications 1 à 4, **caractérisé en ce que** ledit élément de renfort a une section en forme de rectangle.

10. Corps tubulaire selon l'une des revendications précédentes, **caractérisé en ce que** les extrémités du film sont en biseau.

11. Corps tubulaire selon l'une des revendications précédentes, **caractérisé en ce que** ledit film est un film multicouche et comprend au moins une couche dont le soudage bout à bout n'est que partiel ou inexistant.

12. Corps tubulaire selon la revendication 9, **caractérisé en ce que** ladite couche forme la surface externe de l'emballage.

13. Corps tubulaire selon l'une des revendications précédentes, **caractérisé en ce que** ledit élément de renfort comprend plusieurs couches.

14. Corps tubulaire selon l'une des revendications précédentes, **caractérisé en ce que** ledit élément de renfort comprend des absorbeurs d'oxygène.

15. Corps tubulaire selon l'une des revendications précédentes, **caractérisé en ce que** ledit élément de renfort comprend des traceurs microscopiques ou nanoscopiques sous forme de poudre permettant de lutter contre la contrefaçon.

16. Corps tubulaire selon l'une des revendications précédentes, **caractérisé en ce que** le rapport de la rigidité en flexion au niveau de la soudure entre la direction perpendiculaire et la direction parallèle à la soudure est au moins égal à 25.
